# EUROPEAN PATENT SPECIFICATION

(11) **EP 1 281 584 B1**
(45) Date of publication and mention of the grant of the patent: **22.09.2004**
(21) Application number: 02014992.8
(22) Date of filing: 10.07.2002
(51) Int. Cl.: B60R 21/20, B60Q 5/00

(54) **Horn actuating device for a motor vehicle steering wheel**
Hupbetätigungseinrichtung für Kraftfahrzeuglenkrad
Dispositif d'actionnement du klaxon pour un volant de véhicule à moteur

(30) Priority: 03.08.2001 IT TO20010784
(43) Date of publication of application: 05.02.2003
(73) Proprietor: KEY SAFETY SYSTEMS, INC., Sterling Heights, Michigan 48314 (US)
(72) Inventor: Rabagliano, Massimo, 20052 Monza (MI) (IT); Ridolfi, Adolfo, 37039 Tregnago (Verona) (IT); Ridolfi, Roberto, 37039 Tregnago (Verona) (IT); Verda, Luciano, 10040 La Loggia (Torino) (IT)
(74) Representative: Gislon, Gabriele

(56) References cited:
- EP-A- 0 744 329
- EP-A- 1 099 604
- US-A- 4 434 338

## Description

The present invention relates to motor vehicle steering wheels comprising an airbag module and to horn actuating devices mounted on steering wheels of this type.

Different solutions have been proposed in order to provide actuation of the horn of a steering wheel of the type comprising an airbag module.

EP 1 099 604 which corresponds to the preamble of claim 1, provides a horn actuating device for a vehicle steering wheel wherein a plurality of leaf springs which resiliently support a covering element of the steering wheel. Each leaf spring defines a movable electric contact cooperating with fixed electric contacts located within the steering wheel armature for actuation of its horn, upon pressing of the covering element by the user.

US 4,434,338 concerns a switch wherein a coil spring is used as a first contact co-operating with a striker bar, provided in the compression path of the coil spring, and which acts as a second contact.

In Italian patent application TO98A000795 of 17 September 1998, the applicant proposed a motor vehicle steering wheel of the above-stated type comprising: a metallic framework comprising a hub, a ring and a plurality of spokes joining the hub to the ring, an actuating element, typically constituted by an airbag module, which is mounted on the framework of the steering wheel in movable manner between a raised resting position and a lowered horn actuating position, resilient means interposed between said actuating element and said steering wheel framework to return the actuating element to its raised position, a horn actuating device interposed between the actuating element and the steering wheel framework and comprising at least a first electrical contact rigidly connected to the steering wheel framework and at least a second electrical contact which moves with the actuating element and is intended to cooperate with said first electrical contact for actuation of the horn, in which said resilient means are constituted by a plurality of springs, each of which exhibits a fixed base portion supported by the steering wheel framework and a portion operatively associated with the actuating element and having a free end suitable for constituting said second electrical contact which cooperates with said first electrical contact, and in which moreover said springs are mounted on respective plastics supports interconnected by a flexible plastics strip in which are embedded two conductive tracks, respectively connected electrically to each spring and to the first electrical contact cooperating therewith, in such a manner as to form a preassembled unit adapted to the steering wheel framework.

With the aim of further improving the above-specified device from the standpoint of simplicity of manufacture and efficiency of operation, the present invention provides a steering wheel exhibiting the features of claim 1.

In a preferred embodiment, said extended portion is a V-shaped portion contained in a plane perpendicular to the axis of the spring.

Still in the case of said preferred embodiment, there is applied onto each spring an end cap made from plastics which also covers said extended portion which acts as the second electrical contact. Screws are attached to said actuating element, namely to the airbag module, each slidingly mounted from beneath through the steering wheel framework and through a respective helical spring and each having a head suitable for bearing against the lower surface of the steering wheel framework to define an extreme resting position of the airbag module, against which the module is returned by said helical springs.

Still in the case of said preferred embodiment, each screw is restrained from unthreading by a metallic washer interposed between said end cap of each helical spring and a wall of the airbag module, which washer when in the mounted state bears with its internal annular edge within a circumferential neck of the body of the respective screw.

Further features and advantages of the invention will be evident from the following description which refers to the attached drawings, which are provided purely by way of non-limiting examples and in which;

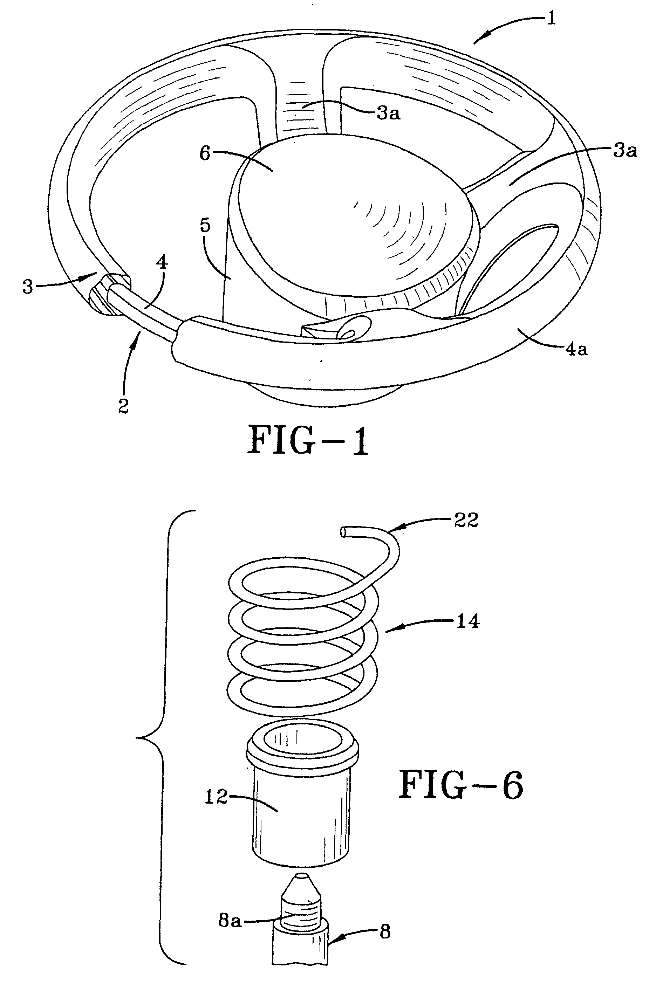

Figure 1 is a perspective view of a preferred embodiment of the steering wheel according to the invention;
Figure 2 is a perspective view of the preassembled unit constituting the horn actuating device according to the invention in its state prior to mounting on the steering wheel;
Figure 3 is a perspective view of the unit of Figure 2 in the state it assumes on the motor vehicle steering wheel;
Figures 4 and 5 are enlarged scale cross-sectional views which show the details of one of the constituent springs of the unit according to the invention before and after mounting on the motor vehicle steering wheel; and
Figure 6 is a perspective exploded view of a detail of Figure 4.

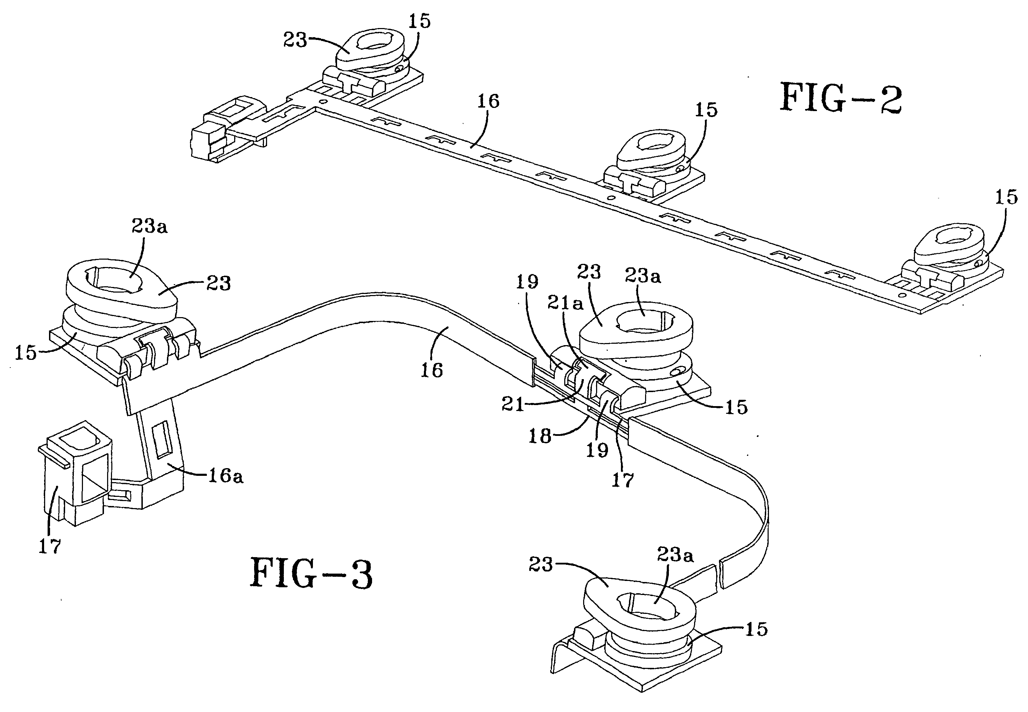

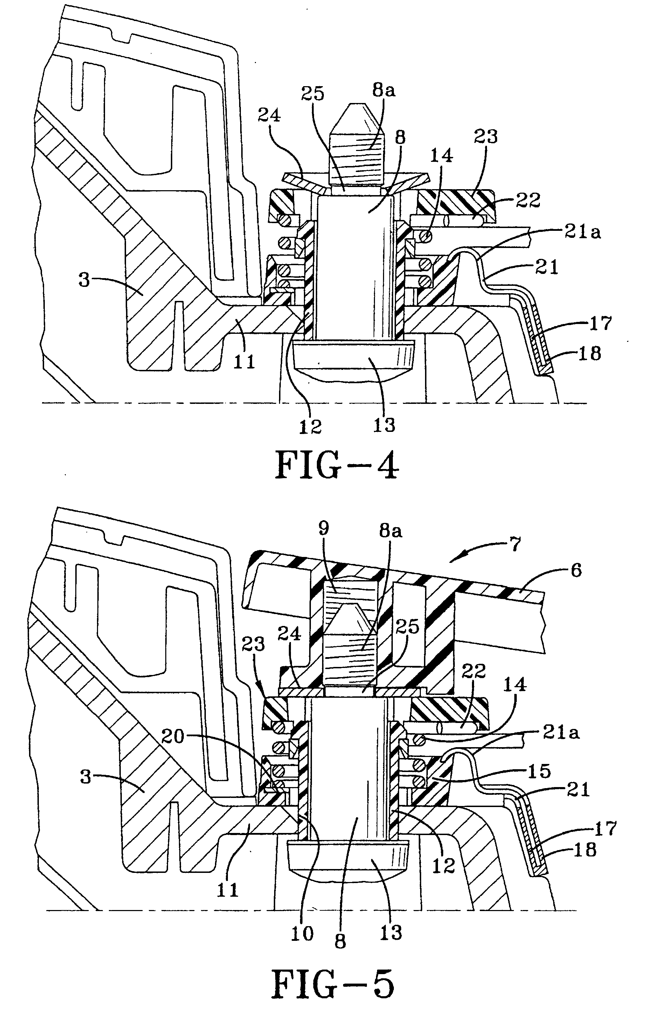

With reference to the drawings, the number 1 denotes a motor vehicle steering wheel in its entirety comprising a metallic framework 2 covered in manner known *per se* with plastics padding 3. The framework 2 comprises a circle 4 connected by means of metallic spokes 3 (a portion of one of which is visible in Figures 4, 5) to a hub (not shown in the drawings) intended to be fixed to the motor vehicle's steering column. Likewise, the padding 3 comprises a circumferential portion 4a which covers the circle 4, three spoke portions 3a which cover the corresponding spokes 3 of the metallic framework and a central body 5 connected to the spokes 3a and surmounted by a cover 6 which is associated with an airbag module. The structure and shape of said module is neither described nor illustrated here since it may be implemented in any known embodiment. What is important for the purposes of understanding the invention is that the cover 6 of the module has stirrups 7 (only one of which is shown in Figure 5) on its internal surface for fixing the support and guide screws 8. Each stirrup 7 comprises a blind threaded hole 9, into which is screwed a threaded end portion 8a of the respective screw 8. Said screw is inserted from beneath through a hole 10 located in an intermediate portion 11 of the respective metallic spoke 3. The intermediate portion 11 is substantially flat and perpendicular to the axis of the steering wheel. The screw 8 is slidingly mounted through the hole 10 of the metallic framework with an interposed plastics sleeve 12. At its lower end, the screw 8 has a head 13 that bears against the lower surface of the metallic framework in the extreme upper position of the airbag module. Said module, with the cover 6 which is a constituent part thereof, is returned towards said extreme upper position by a plurality of (in this case 3) helical springs 14. The lower end of each helical spring 14 rests on the framework 11 with an interposed plastic component 15 that defines a seat for the spring. As can be seen in Figures 2, 3, the plastics supports 15 are interconnected by a flexible plastics strip 16 in which are embedded two conductive tracks 17, 18. At each support 15, two wings 19 leave the track 17 and extend to form a metallic contact 20 which is embedded in the plastics support 15 and is in electrical contact with the lower end of the respective helical spring 14. Still at each support 15, a wing 21 leaves the track 18 this time, the end 21 a of which wing defines a first electrical contact of the motor vehicle's horn actuating device.

The upper end of each spring 14 has an extended portion 22 that protrudes outside the theoretical cylinder of the helical spring (see Figure 6). The extension 22 is V-shaped and is substantially contained in a plane perpendicular to the axis of the helical spring. Said extended portion 22 constitutes a second electrical contact intended to come into contact with the first electrical contact 21a to actuate the horn.

The upper end of the spring 14 is covered with a cap 23 comprising a plastics component which has a central hole 23a to allow the screw 8 to pass through and is shaped so as to be able to cover the upper circular end of the helical spring with its extended portion 22.

With reference to Figures 2 and 3, the flexible strip 16 is extended into a portion 16a ending in a plastics body 17 of a connector for connecting the electrical tracks 17, 18 to the motor vehicle's on-board electric power supply.

Figures 4 and 5 illustrate the mounting of each screw 8. As can be seen in Figure 4, before the airbag module is applied onto the upper end 8a of the screw 8, a conical metallic washer 24 is fitted which, in the mounted state (Figure 5), is interposed between the plastics cap 23 and a wall of the stirrup 7. Once the screw 8 has been screwed into the hole 9 of the stirrup 7, the washer 24 is forced to adopt a flattened state with its internal annular edge bearing within a circumferential neck 25 of the body of the screw 8, so as to act as an anti-unscrewing device for the screw. Once mounted in this manner, each screw 8 is rigidly connected to the air bag module and thus acts as a support and guide element for said module. The airbag module is returned towards its resting position by the three helical springs 14. By exerting hand pressure on the cover 6, the module may be lowered as far as to bring the upper end 22 of at least one of the springs 14 into contact with the respective electrical contact 21 a and so actuate the horn. The whole unit illustrated in Figures 2, 3 may be preassembled and mounted in the steering wheel in a single operation, after which the airbag module may be mounted by screwing in the screws 8 through the passage in the framework 11.

The specific shape of the helical springs 14 which return the airbag module towards its resting position ensures, on the one hand, simplicity of manufacture and, on the other, an effective return action of the airbag module towards the resting position. Finally, the above-described shape of the springs means that the springs themselves may be used as electrical contact means for actuating the horn.

## Claims

1. A motor vehicle steering wheel comprising:
a metallic framework (2) comprising a hub, a ring (4) and a plurality of spokes (3) joining the hub to the ring (4),
an actuating element (6, 7), typically constituted by an airbag module, which is mounted on the framework (2) of the steering wheel in movable manner between a raised resting position and a lowered horn actuating position,
resilient means (14) interposed between said actuating element (6, 7) and said steering wheel framework (2) to return the actuating element to its raised position,
a horn actuating device interposed between the actuating element (6, 7) and the steering wheel framework (2) and comprising at least a first electrical contact (21a) rigidly connected to the steering wheel framework (2) and at least a second electrical contact (22) which moves with the actuating element (6, 7) and is intended to cooperate with said first electrical contact (21a) for actuation of the horn,
in which said resilient means are constituted by a plurality of springs (14), each of which exhibits a fixed base portion supported by the steering wheel framework (2) and a portion operatively associated with the actuating element (6, 7) and having a free end (22) suitable for constituting said second electrical contact which cooperates with said first electrical [contact] (21a), and
in which moreover said springs (14) are mounted on respective plastics supports (15) interconnected by a flexible plastics strip (16) in which are embedded two conductive tracks (17, 18), respectively connected electrically to each spring (14) and to the first electrical contact (21a) cooperating therewith, in such a manner as to form a preassembled unit adapted to the steering wheel framework (2),
**characterised in that**
said springs (14) are helical springs each having said free end acting as the second electrical contact constituted by an extended portion (22) protruding outside the theoretical cylinder of the helical spring (14), and **in that**
a plurality of screws (8) extend from said framework (2) to said actuating element (6, 7) and are directly screwed into said actuating element (6, 7) to act as a guide and support element for said actuating element (6, 7) and said helical springs (14);
between said actuating element (6, 7) and the upper end of each helical spring (14), there is interposed a washer (24) acting as anti-unscrewing device for one of said screws (8).

2. A steering wheel according to claim 1, **characterised in that** said extended portion (22) is a V-shaped portion contained in a plane perpendicular to the axis of the helical spring (14).

3. A steering wheel according to claim 2, **characterised in that** there is applied onto each spring an end cap (23) made from plastics which also covers said extended portion (22) which acts as an electrical contact.

4. A steering wheel according to claim 2, **characterised in that** said screws (8) are attached to said actuating element, each slidingly mounted from beneath through the steering wheel framework (2) and through a respective helical spring (14), each screw (8) having a head (13) suitable for bearing against the lower surface of the steering wheel framework (2) in the extreme resting position of the actuating element (6, 7).

5. A steering wheel according to any preceding claim, **characterised in that** said washer (24) is suitable for bearing with its internal annular edge within a circumferential neck (25) of the body of the respective screw (8) in the mounted state of the screw (8) on the actuating element (6, 7).

## Patentansprüche

1. Kraftfahrzeuglenkrad, das Folgendes umfasst:
einen Metallrahmen (2), umfassend eine Nabe, einen Ring (4) und eine Mehrzahl von Speichen (3), die die Nabe mit dem Ring (4) verbinden,
ein Betätigungselement (6, 7), das typischerweise von einem Airbagmodul gebildet wird, das an dem Rahmen (2) des Lenkrads auf bewegliche Weise zwischen einer erhöhten Ruheposition und einer gesenkten Hupbetätigungsposition montiert ist,
elastische Mittel (14) zwischen dem Betätigungselement (6, 7) und dem Lenkradrahmen (2), um das Betätigungselement in seine erhöhte Position zurückzubringen,
eine Hupbetätigungsvorrichtung, die sich zwischen dem Betätigungselement (6, 7) und dem Lenkradrahmen (2) befindet und wenigstens einen ersten elektrischen Kontakt (21 a), der starr mit dem Lenkradrahmen (2) verbunden ist, und wenigstens einem zweiten elektrischen Kontakt (22) umfasst, der sich mit dem Betätigungselement (6, 7) bewegt und mit dem genannten ersten elektrischen Kontakt (21a) zur Betätigung der Hupe zusammenwirken soll,
wobei die elastischen Mittel von einer Mehrzahl von Federn (14) gebildet werden, von denen jede einen festen Basisabschnitt, der auf dem Lenkradrahmen (2) gelagert ist, und einen Abschnitt aufweist, der funktionell mit dem Betätigungselement (6, 7) assoziiert ist und ein freies Ende (22) hat, das dazu geeignet ist, den zweiten elektrischen Kontakt zu bilden, der mit dem ersten elektrischen [Kontakt] (21 a) zusammenwirkt, und
wobei darüber hinaus die Federn (14) auf jeweiligen Plastikunterlagen (15) montiert sind, die durch ein flexibles Plastikband (16) miteinander verbunden sind, in dem zwei Leiterbahnen (17, 18) eingebettet sind, die jeweils elektrisch mit jeder Feder (14) und mit dem ersten elektrischen Kontakt (21a) verbunden sind, der damit zusammenwirkt, auf eine solche Weise, dass eine vorgefertigte Einheit entsteht, die an den Lenkradrahmen (2) angepasst ist,
**dadurch gekennzeichnet, dass**
die Federn (14) Spiralfedern sind, deren freies Ende jeweils als der zweite elektrische Kontakt wirkt, der von einem verlängerten Abschnitt (22) gebildet wird, der außerhalb des theoretischen Zylinders der Spiralfeder (14) vorsteht, und dadurch, dass
eine Mehrzahl von Schrauben (8) von dem Rahmen (2) in das Betätigungselement (6, 7) verlaufen und direkt in das Betätigungselement (6, 7) geschraubt werden, um als Führung und Auflageelement für das Betätigungselement (6, 7) und die Spiralfedern (14) zu dienen;
sich zwischen dem Betätigungselement (6, 7) und dem oberen Ende jeder Spiralfeder (14) eine Scheibe (24) befindet, die als Abschraubsicherungsvorrichtung für eine der Schrauben (8) dient.

2. Lenkrad nach Anspruch 1, **dadurch gekennzeichnet, dass** der verlängerte Abschnitt (22) ein V-förmiger Abschnitt ist, der in einer Ebene lotrecht zur Achse der Spiralfeder (14) enthalten ist.

3. Lenkrad nach Anspruch 2, **dadurch gekennzeichnet, dass** auf jede Feder eine Endkappe (23) aus Plastik aufgebracht wird, die auch den verlängerten Abschnitt (22) bedeckt, der als elektrischer Kontakt dient.

4. Lenkrad nach Anspruch 2, **dadurch gekennzeichnet, dass** die Schrauben (8) an dem Betätigungselement angebracht sind, die von unterhalb des Lenkradrahmens (2) und durch eine jeweilige Schraubenfeder (14) jeweils gleitend montiert werden, wobei jede Schraube (8) einen Kopf (13) hat, der an der Unterseite des Lenkradrahmens (2) in der äußersten Ruheposition des Betätigungselementes (6, 7) anliegen kann.

5. Lenkrad nach einem der vorherigen Ansprüche, **dadurch gekennzeichnet, dass** die genannte Scheibe (24) für die Anlage an dem inneren ringförmigen Rand innerhalb einer Umfangseinschnürung (25) des Körpers der jeweiligen Schraube (8) im montierten Zustand der Schraube (8) auf dem Betätigungselement (6, 7) geeignet ist.

## Revendications

1. Volant d'un véhicule automobile, comprenant:
un cadre métallique (2) comprenant un moyeu, un anneau (4) et plusieurs rayons (3) reliant le moyeu à l'anneau (4),
un élément d'actionnement (6, 7) constitué typiquement par un module de coussin d'air, monté sur le cadre (2) du volant de manière mobile, entre une position de repos surélevée et une position abaissée d'actionnement du klaxon,
des moyens élastiques (14) agencées entre ledit élément d'actionnement (6, 7) et ledit cadre du volant (2) pour ramener l'élément d'actionnement vers la position surélevée,
un dispositif d'actionnement du klaxon, agencé entre l'élément d'actionnement (6, 7) et le cadre du volant (2) et comprenant au moins un premier contact électrique (21a), connecté de manière rigide sur le cadre du volant (2) et au moins un deuxième contact électrique (22) se déplaçant avec l'élément d'actionnement (6, 7) et destiné à coopérer avec ledit premier contact électrique (21a) en vue de l'actionnement du klaxon,
lesdits moyens élastiques étant constitués par plusieurs ressorts (14), comportant chacun une partie de base fixe supportée par le cadre du volant (2) et une partie associée en service à l'élément d'actionnement (6, 7) et comportant une extrémité libre (22) destinée à constituer ledit deuxième contact électrique coopérant avec ledit premier [contact] électrique (21a), et
lesdits ressorts (14) étant montés sur des supports plastiques respectifs (15) interconnectés par une bande plastique flexible (16) dans laquelle sont noyées deux pistes conductrices (17, 18) connectées respectivement de manière électrique à chaque ressort (14) et au premier contact électrique (21a) coopérant avec celui-ci, de sorte à former une unité préassemblée adaptée au cadre du volant (2),
**caractérisé en ce que**
lesdits ressorts (14) sont des ressorts hélicoïdaux, comportant chacun ladite extrémité libre servant de deuxième contact électrique, constituée par une partie étendue (22) débordant vers l'extérieur du cylindre théorique du ressort hélicoïdal (14), et **en ce que**
plusieurs vis (8) s'étendent dudit cadre (2) vers ledit élément d'actionnement (6, 7) et sont vissées directement dans ledit élément d'actionnement (6, 7) de sorte à servir d'élément de guidage et de support dudit élément d'actionnement (6, 7) et desdits ressorts hélicoïdaux (14);
une rondelle (24) servant de dispositif empêchant un dévissage de l'une desdites vis (8) étant agencée entre ledit élément d'actionnement (6, 7) et l'extrémité supérieure de chaque ressort hélicoïdal (14).

2. Volant selon la revendication 1, **caractérisé en ce que** ladite partie étendue (22) est une partie en V contenue dans un plan perpendiculaire à l'axe du ressort hélicoïdal (14).

3. Volant selon la revendication 2, **caractérisé en ce que** chaque ressort comporte un capuchon d'extrémité (23) composé de plastique, recouvrant aussi ladite partie étendue (22) servant de contact électrique.

4. Volant selon la revendication 2, **caractérisé en ce que** lesdites vis (8) sont fixées audit élément d'actionnement, chacune étant montée par glissement d'en bas à travers le cadre du volant (2) et à travers un ressort hélicoïdal respectif (14), chaque vis (8) comportant une tête (13) destinée à reposer contre la surface inférieure du cadre du volant (2) dans la position de repos extrême de l'élément d'actionnement (6, 7).

5. Volant selon l'une quelconque des revendications précédentes, **caractérisé en ce que** ladite rondelle (24) est destinée à reposer avec son bord annulaire interne dans un col circonférentiel (25) du corps de la vis respective (8) dans l'état de montage de la vis (8) sur l'élément d'actionnement (6, 7).
